# EUROPEAN PATENT APPLICATION

(11) **EP 4 614 491 A1**
(43) Date of publication of application: **10.09.2025**
(21) Application number: 22964380.4
(22) Date of filing: 01.11.2022
(51) Int. Cl.: G09G 5/00, G09G 5/36, G09G 5/38

(54) **IMAGE DISPLAY SYSTEM AND DISPLAY DEVICE**

(71) Applicant: Virtualwindow Co., Ltd., Tokyo 101-0031 (JP)
(72) Inventor: SATO, Rui, Tokyo 101-0031 (JP)
(74) Representative: Plougmann Vingtoft a/s
(86) International application number: PCT/JP2022/040854
(87) International publication number: WO 2024/095358

(57) **Abstract**

A technology is provided that enables a virtual object to be superimposed on an object in a real space viewed by a user through a transmissive display device, under conditions where the relative position between the user's viewpoint and the transmissive display device is not fixed.

An image display system includes: a transmissive display device; a storage unit configured to store position information and three-dimensional shape information for the display device, an object in real space, and a virtual object in a virtual space; and a processing unit configured to generate an image and display the image on the display device by performing, in order for a virtual object to be superimposed on a real space that is viewed through the display device when the display device is viewed from a viewpoint position such that the virtual object appears in a same manner as when the virtual space is viewed from the viewpoint position, projection transformation or perspective projection transformation based on the viewpoint position, position information and a three-dimensional shape of the display device, and three-dimensional image data of the virtual object.

## Description

### [Technical Field]

The present disclosure relates to a technology for displaying a virtual object superimposed on an object in real space that is visible through a transmissive display device.

### [Background Art]

Mixed Reality (MR) is known as a technology that superimposes real-world objects and virtual objects for display. As a device for this technology, there is Hololens (registered trademark), for example, which is a head-mounted display (HMD) developed by Microsoft Corporation (see NPL 1). Hololens allows a user to view real space through the transparent eyepiece of Hololens (HMD) worn on the head, while simultaneously viewing a virtual CG object displayed in the eyepiece superimposed on the real space. Hololens is also equipped with a distance measurement sensor and achieves accurate superimposition of real-space objects and virtual CG objects by projecting the virtual CG objects while acquiring the positions and shapes of real-world objects in the world outside the HMD.

### [Citation List]

### [Patent Literature]

[NPL 1] "Microsoft HoloLens 2", Microsoft Corporation, [online], [Searched on October 19, 2022], Internet <https://www.microsoft.com/ja-jp/hololens>

### [Summary of Invention]

### [Technical Problem]

However, the accurate superimposition of real-space objects and virtual CG objects using Hololens as described above is achieved because the HMD serving as the display device is fixed to the user's head, i.e., the positional relationship between the user's eyes and the image display device (eyepiece) is always fixed. To achieve superimposition display similar to display in which the display device is not fixed to the user's head, it is necessary to accurately acquire changes in the positional relationship between the user's eyes and the image display device, while simultaneously acquiring changes in the positional relationship between the image display device and real-space objects, and perform rendering calculations in accordance with both changes. To achieve this, a new methodology and a technology to realize the methodology are needed.

A main reason why a technology for superimposing a virtual CG object on a real-space object without fixing the display device to the head of a user has not been prevalent is that in short, it is technically difficult to ensure the quality of superimposition to be a level that is suitable for general use. In the case of Hololens, at least the relative positional relationship between the viewpoint position (eyeball position) and the display device is fixed. Thus, a virtual object can be superimposed on a real-space object as long as information about the positional relationship between the display device and the real-space object, distance, and shape is available. That is, there is one variable factor that involves a significant change concerning the relative position.

In contrast, to perform superimposition display similar to display in which the display device is not fixed to the user's head, in addition to acquiring information about the positional relationship between the display device and the real-space object, distance, and shape, the display on the display device needs to reflect the distance and the relative positional relationship between the user's viewpoint position and the display device under conditions where the distance and the positional relationship vary significantly. In other words, complexity is increased since there would be two variable factors that involve a significant change concerning the relative position. Additionally, errors accumulate for each variable factor, making it difficult to ensure the quality of superimposition. A specific methodology is therefore required.

It is an object of the present disclosure to provide a methodology that enables a virtual object to be superimposed on a real-space object viewed by a user through a transmissive display device, under conditions where the relative position between the user's viewpoint and the transmissive display device is not fixed.

### [Solution to Problem]

An image display system according to one aspect of the present disclosure includes: a transmissive display device configured to be capable of displaying an image; a storage unit configured to store, for each of the display device, an object in real space that is present around the display device, and an arbitrary virtual object, position information and three-dimensional shape information in a virtual space constructed on a predetermined reference coordinate system that is set by superimposition thereof on a coordinate system in real space; and a processing unit configured to generate an image and display the image on the display device by performing, in order for a virtual object to be accurately superimposed on a real space that is viewed through the display device when the display device is viewed by a user from a given viewpoint position such that the virtual object appears in the same manner as when the virtual space is viewed from the viewpoint position, projection transformation or perspective projection transformation based on the viewpoint position, position information and a three-dimensional shape of the display device, and three-dimensional image data representing the virtual object.

### [Advantageous Effects of Invention]

According to one aspect of the present disclosure, it is possible to provide a technology that enables a virtual object to be accurately superimposed with high quality on a real-space object viewed by a user through a transmissive display device, under conditions where the relative position between the user and the transmissive display device is not fixed.

### [Brief Description of Drawings]

[Fig. 1]

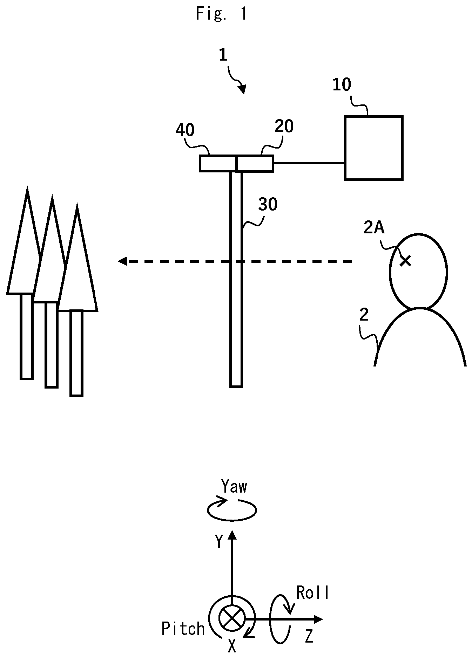

   Fig. 1 is a schematic configuration diagram of an image display system according to a first embodiment of the present disclosure.
[Fig. 2]

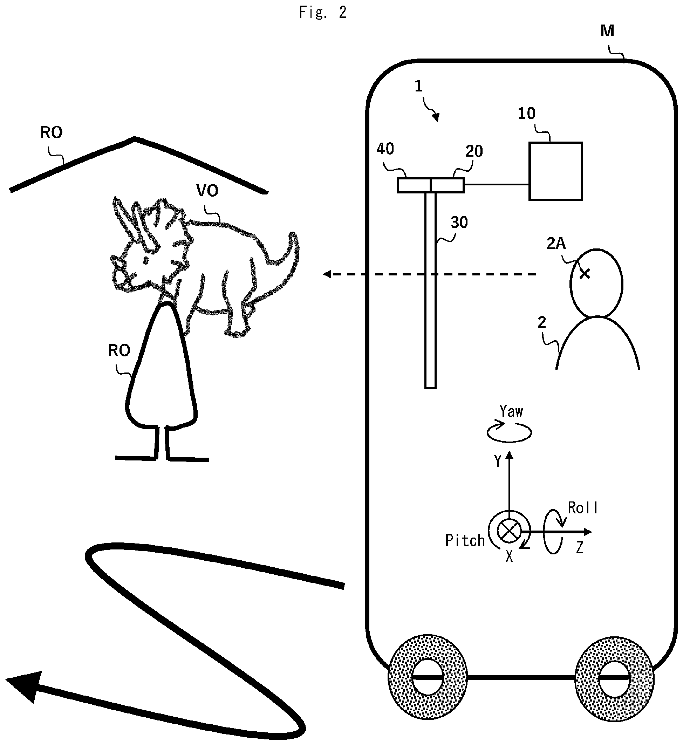

   Fig. 2 is a schematic configuration diagram showing an example in which the image display system of the present embodiment is mounted on a vehicle.
[Fig. 3]

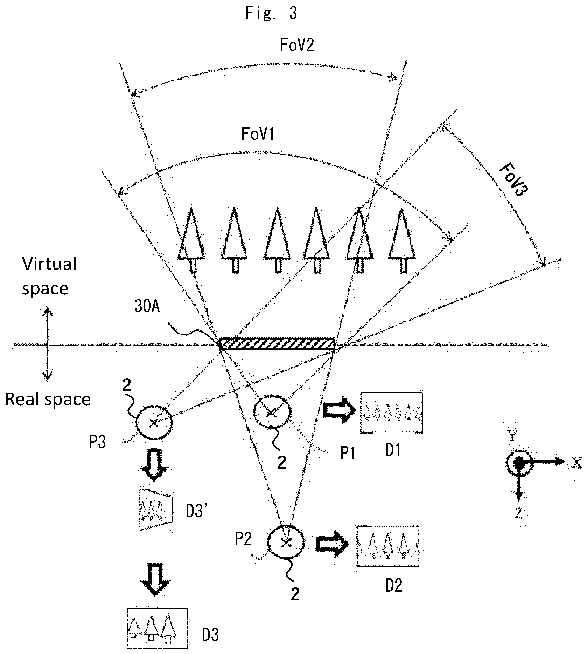

   Fig. 3 is a diagram for illustrating how the image display system according to the present embodiment displays an image according to a user viewpoint position.
[Fig. 4]

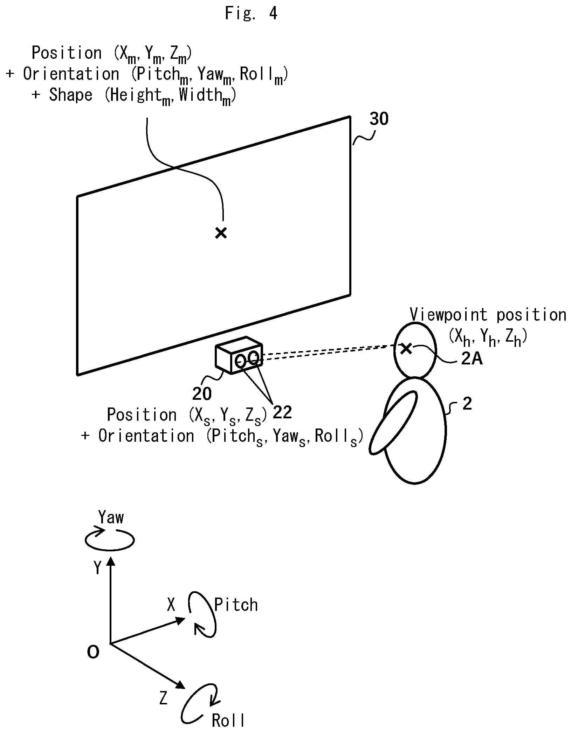

   Fig. 4 is a conceptual diagram for illustrating the calculation of a viewpoint position.
[Fig. 5]

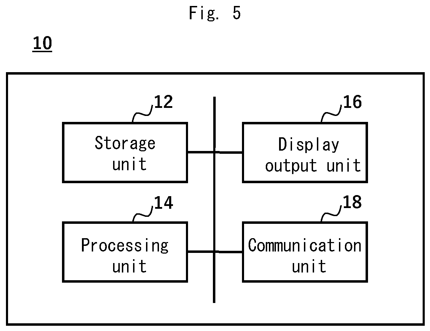

   Fig. 5 is a block diagram showing a configuration of an image generation device according to the first embodiment.
[Fig. 6]

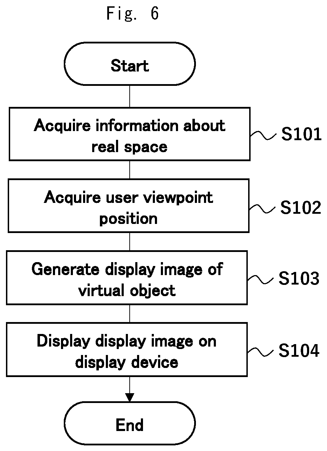

   Fig. 6 is a flowchart illustrating an overall process performed by the image generation device according to the first embodiment.
[Fig. 7]

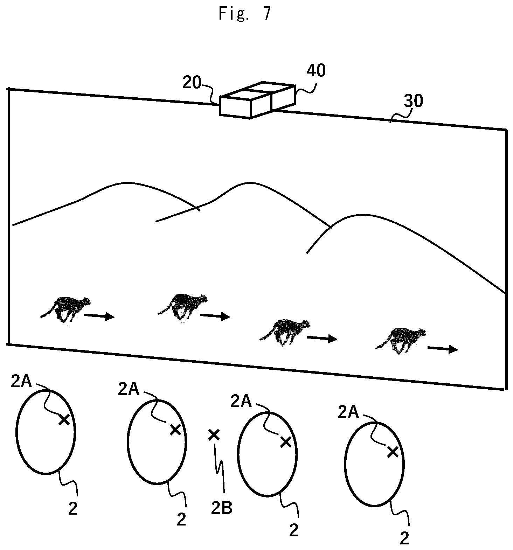

   Fig. 7 is a diagram showing an example of a display device in a modification of the system according to the first embodiment, and an example of a display image on the display device.
[Fig. 8]

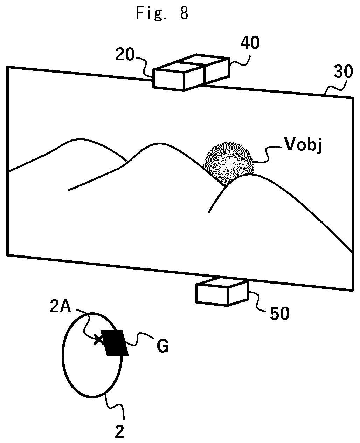

   Fig. 8 is a diagram showing a display device and the like in a system according to a second embodiment.
[Fig. 9]

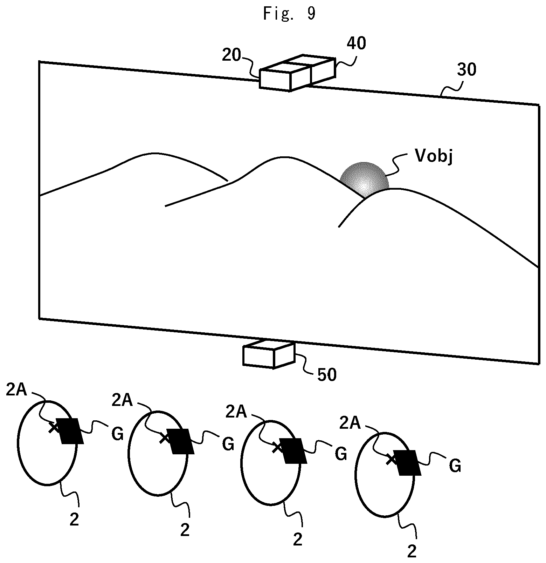

   Fig. 9 is a diagram showing an example of a display device in a modification of the system according to the second embodiment, and an example of a display image on the display device.
[Fig. 10]

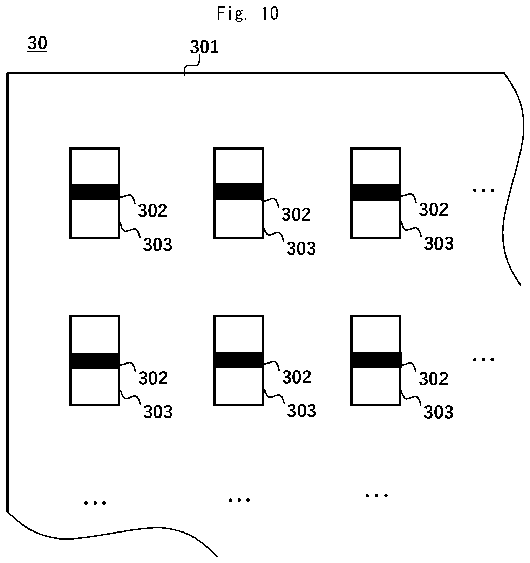

   Fig. 10 is a schematic diagram for illustrating a configuration of a display device in a system according to a third embodiment.
[Fig. 11]

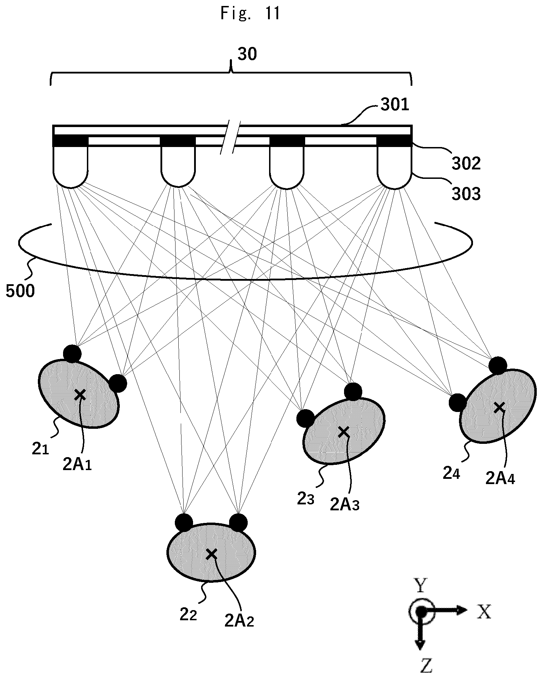

   Fig. 11 is a diagram for illustrating a more detailed configuration of the display device according to the third embodiment and display operation control by the display device.
[Fig. 12]

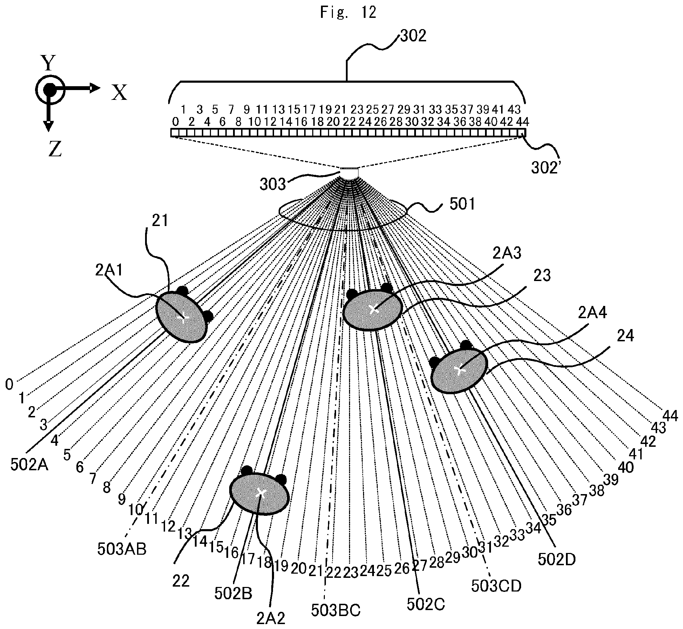

   Fig. 12 is a diagram for illustrating a more detailed configuration of the display device according to the third embodiment and display operation control by the display device.
[Fig. 13]

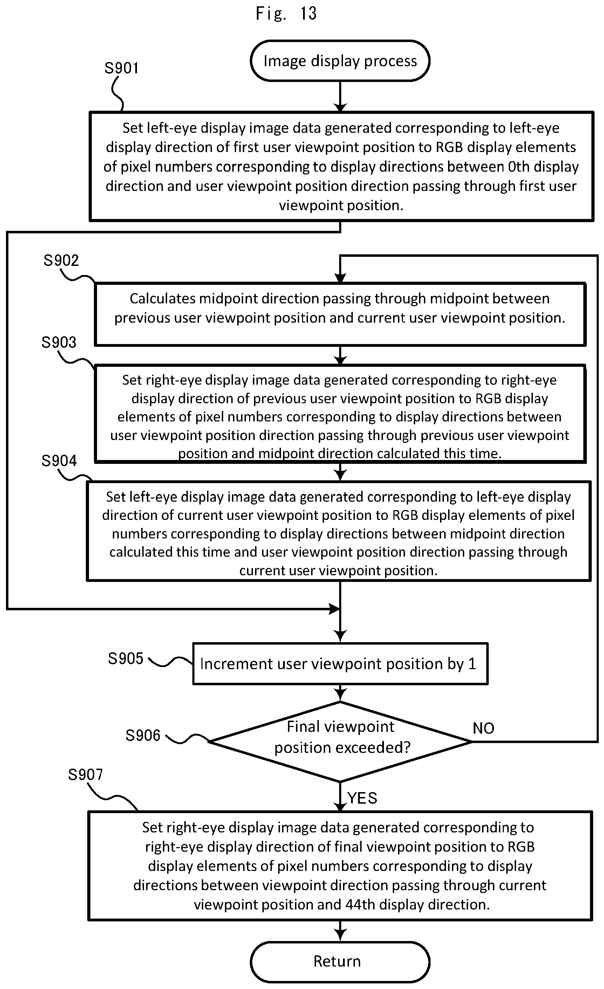

   Fig. 13 is a flowchart showing a detailed example of the display processing in step S104 of Fig. 6 described in the first embodiment.
[Fig. 14]

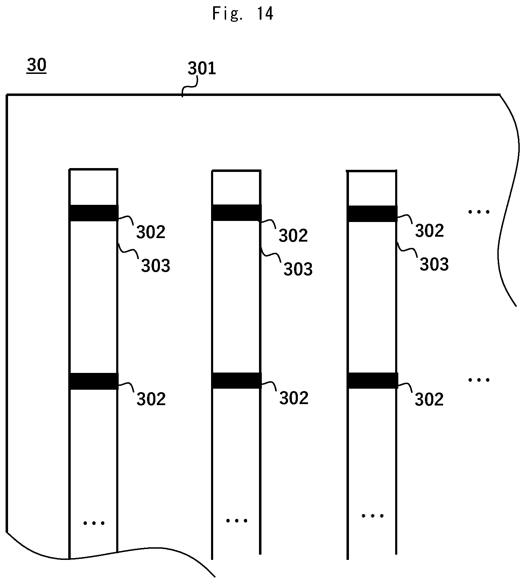

   Fig. 14 is a diagram showing a display device of a modification of the system of the third embodiment.

### [Description of Embodiments]

### [First Embodiment]

A first embodiment of the present disclosure is described with reference to the drawings.

Fig. 1 is a schematic configuration diagram of an image display system according to a first embodiment of the present disclosure. As shown in Fig. 1, an image display system (hereinafter, may also be simply referred to as a "system") 1 according to this embodiment includes an image generation device 10, which mainly generates a virtual object image to be presented to a user, a measurement device 20, which measures the viewpoint position of a user 2, a transmissive display device 30, which displays the image generated by the image generation device 10, and a real space information acquisition device 40 (hereinafter, may also be simply referred to as an "acquisition device 40"), which acquires environmental information of the real space (real world) that the user can see through the transmissive display device 30 (information on an object present in the real world, such as the position, shape, size, distance to the object, and the like). In one example, the image generation device 10 is a computer that executes a software program using a processor, and also serves as a calculation unit (not shown) of the measurement device 20.

The transmissive display device 30 in this embodiment is what is known as a "transmissive" display device, and may be configured, for example, by a transmissive organic EL (Electro Luminescense) display (transmissive OLED), a transmissive liquid crystal display (transmissive LCD), or a transmissive screen onto which an image is projected from an external projector or the like. The transmissive display device 30 of this embodiment, which is configured by such a transmissive display, is transparent or semi-transparent, and allows the real space environment on the other side to be viewed through the transmissive display device 30. Also, by displaying an image on the transmissive display device 30, it is possible to provide a visual experience in which a virtual object represented by the display image appears as if it is in the real space viewed through the transmissive display device 30. The transmissive display device 30 of this embodiment can be installed in a fixed manner at any position, such as a window of a building, a window of a vehicle such as an automobile, bus, ship, or airplane, or on an indoor table. In this case, a virtual object can be superimposed on the outdoor or indoor real space scenery or landscape that can be viewed through the transmissive display device 30.

In one example, the measurement device 20 (sensor 22) is provided on the lower or upper side of the transmissive display device 30 located in front of the user 2, and measures the user's viewpoint position from the front side of the user 2.

While the user 2 is present within a range in which the user 2 can see the transmissive display device 30, the measurement device 20 measures the position of a viewpoint position 2A of the user 2 in a predetermined reference coordinate system. The viewpoint position 2A is a position that corresponds to the position of the eyes. There are no particular limitations on the specific viewpoint position 2A to be used for processing. For example, the midpoint between the eyes of the user 2, the center point of the head, or a position in the head inward of the center of the eyes by a predetermined length may be used as the viewpoint position 2A.

In this embodiment, a use case in which the transmissive display device 30 is installed in a window of a vehicle such as an automobile is mainly described using a world coordinate system that is fixed and defined in real space and a local coordinate system that is defined with reference to the vehicle. It is assumed that both the world coordinate system and the local coordinate system are orthogonal coordinate systems having three axes, x, y, and z. Once the position and direction of the vehicle in the world coordinate system are specified, the relationship between the world coordinate system and the local coordinate system is determined, so that they can be converted into each other. The world coordinate system can be set in any manner with respect to the real space. Also, the local coordinate system can be set in any manner with respect to the vehicle.

Fig. 2 is a schematic configuration diagram showing an example in which the image display system of this embodiment is mounted on a vehicle. In the example shown in Fig. 2, the image display system 1, which includes the image generation device 10, the measurement device 20, the transmissive display device 30, and the real space information acquisition device 40, is mounted on a vehicle M, and provides an occupant (user) 2, such as the driver or a passenger of the vehicle M, with a visual experience that combines real scenery with virtual images. As shown in Fig. 2, the vehicle M of this embodiment may be a small one-seater passenger vehicle that is placed in a real space (real world), in which various objects in real life (hereinafter may also be referred to as "real objects") RO are present, and travels within the real space, for example. However, the vehicle M is not limited to a passenger vehicle, and may be a passenger car, a bus, a railroad car, an airplane, a ship, a vehicle for an attraction facility, or the like.

Fig. 2 shows, as an example of a local coordinate system with reference to the position and direction of the vehicle, an orthogonal coordinate system having an X-axis pointing to the right of the user 2, a Y-axis pointing upward, and a Z-axis pointing rearward. The sensor 22 (not shown in Fig. 2) in the measurement device 20 and the transmissive display device 30 have their positions and orientations fixed in this local coordinate system. The orientation is represented by Pitch around the X-axis, Yaw around the Y-axis, and Roll around the Z-axis.

The image generation device 10 displays a virtual object VO in a virtual space on the transmissive display device 30 based on the position and direction of the vehicle, the viewpoint position 2A of the user 2 in the vehicle, and the fixed position and orientation of the transmissive display device 30. At this time, the virtual object VO is placed in a three-dimensional virtual space defined by the world coordinate system, and the world coordinate system of the real space and the world coordinate system of the virtual space are defined and overlaid such that their positional relationship and zoom ratios match. The user looks into the real space from the viewpoint position 2A through the transmissive display device 30 and, at the same time, looks into the virtual space fixed to the same world coordinate system. At this time, in order to give the user 2 the optical illusion that the virtual object VO in the virtual space is present simultaneously in the real space, that is, in order for the virtual object VO to appear as if it is present in the real space, calculation processing is performed to generate an image to be displayed on the display screen. Specifically, three-dimensional CG data in the virtual space defined in three dimensions based on the coordinates of the viewpoint position 2A is subjected to projection transformation, perspective projection transformation, or similar calculation processing to generate a two-dimensional image on the display screen, which is a two-dimensional surface. The image is then displayed on the transmissive display device 30. As a result, the three-dimensional information of the virtual space is converted into two-dimensional information with geometrical precision and presented to the user 2.

The image generation device 10 stores three-dimensional CG data representing virtual objects to be displayed and superimposed on the real space visible through the transmissive display device 30, for example, data on a cheetah drawn in three-dimensional CG, in advance in an internal storage unit 12 (see Fig. 5) together with information on the placement in the virtual space, and generates a display image through calculation processing to appropriately display the three-dimensional CG on the transmissive display device 30 based on the viewpoint position 2A so that the image appears feasible and natural with geometrical precision to give each user 2 the optical illusion that the virtual object is present in real space.

In the present specification and claims, the term "image" is used to include not only one or more still images, but also a moving image (video) made up of a plurality of images that are successive in time series.

According to this embodiment, in one example, an image in which a virtual object is superimposed on the real-space scenery seen from the vehicle window is generated according to the viewpoint position 2A of the user 2 and displayed on the transmissive display device 30, allowing the user 2 to have the sensation that the virtual object is located together with and present simultaneously with the real-world objects in the real space within the real world. Also, the present embodiment uses, rather than a head-mounted display (HMD), which moves together with the user's head, a system that displays an image on a screen fixed to a position other than the user's body part including the user's head. Thus, a display output unit 16 in the image generation device 10 can be used as a display device in the mixed reality (MR) technology, allowing the user to experience a realistic mixed reality in the same manner as a head-mounted display, without causing the user 2 any inconvenience or discomfort that would otherwise be caused by the use of a head-mounted display.

The image display system 1 of this embodiment is described in further detail below.

In one example, the measurement device 20 continuously measures the viewpoint position 2A, and the image generation device 10 generates a display image by following the viewpoint position 2A and displays it on the screen of the transmissive display device 30. As a result, when the head of the user 2 moves, the display image displayed on the transmissive display device 30 changes following the viewpoint position 2A, which moves with the movement of the head of the user 2, giving the user 2 the sensation that a virtual object is present in the real space. Image generation that follows the viewpoint position 2A is achieved by continually generating images that correspond to how the virtual object in the virtual space appears when viewed through the display device from the viewpoint position 2A at that time. The method for generating the image in this situation is as described above. Although the description has been made with respect to following the viewpoint position 2A, the present invention is not limited to this, and an image may be generated by predicting the viewpoint position 2A at a slightly later time. When the viewpoint position 2A moves, generating an image based on the current position of 2A and displaying the result would cause a delay in the image display due to the time required for calculation. This may cause the user to experience a sense of incongruity. To solve this problem, a method may be used in which time-series data on the viewpoint position 2A is collected while predicting the position at a slightly later time to generate an image in advance. Although the method for predicting the viewpoint position has been described here, the target of prediction is not limited to the viewpoint position, and prediction calculation may also be used for the relative position of the local coordinate system with respect to the world coordinate system. For example, assuming that the vehicle is a car, the position of the vehicle at a slightly later time can be accurately predicted on the basis of the traveling direction, speed information, and map information. The prediction result may be reflected in the image generation described above.

Fig. 3 is a diagram for illustrating how the image display system according to this embodiment displays an image in accordance with the user's viewpoint position. In the description of Fig. 3, the user space on the front side of the transmissive display device 30 with reference to the user's viewpoint position is defined as a real space, and the space on the rear side is defined as a virtual space. The virtual space defined on the rear side of the transmissive display device 30 is displayed on the transmissive display device 30 as an image visible from a position P1 at which the head of the user 2 is located, and through a window that is simulated by the transmissive display device 30 (hereinafter also referred to as a "simulated window"). A virtual object in the virtual space is defined by three-dimensional CG data, which will be described below. In the example of Fig. 3, six trees are arranged side by side as virtual objects. Although the virtual space is defined on the rear side of the transmissive display device 30 in Fig. 3 for the purpose of description, the virtual space may also be defined on the front side of the transmissive display device 30, or a space including the front and rear sides of the transmissive display device 30 may be defined as the virtual space. This allows the transmissive display device 30 to display, not only an image in which a virtual object in the virtual space appears to be present on the other side of the virtual window created by the transmissive display device 30, but also an image in which a virtual object in the virtual space appears to protrude frontward from the transmissive display device 30.

When the user 2 is at the position P1 near and in front of the transmissive display device 30, the field of view FoV1 of the virtual space viewed through the simulated window on the transmissive display device 30 is wide, and all six trees are displayed on the transmissive display device 30 such that they are within the field of view FoV1 (display D1). When the user 2 moves from the position P1 in the z direction to a position P2, which is farther from the transmissive display device 30, the field of view FoV2 of the virtual space viewed through the simulated window created by the transmissive display device 30 becomes narrower, and the virtual space is displayed such that only three whole trees and parts of the trees on either side of them are within the field of view FoV2 (display D2). Also, when the user 2 moves in the -x (minus x) direction from the position P1 to a position P3, the field of view FoV3 of the virtual space viewed through the simulated window created by the transmissive display device 30 changes in the x direction. Only the three trees on the right side are within the field of view Fov3. Additionally, in the field of view FoV3, the screen is viewed diagonally rather than from the front side of the transmissive display device 30, but the lateral thickness of the trees viewed through the simulated window needs to be the same thickness as when viewed from the front side (display D3'). For this reason, when displaying the trees on the transmissive display device 30, an image is displayed that has been appropriately expanded and contracted so as to appear like display D3' (display D3) to the user. In this manner, in this embodiment, when generating an image to be displayed on the transmissive display device 30, processing (for example, projection transformation, perspective projection transformation, or similar calculations) for projecting a virtual object in the virtual space defined in the three-dimensional CG data onto the transmissive display device 30, that is, a two-dimensional surface, is performed as processing by which the virtual object in the virtual space appears to the user 2 as a feasible and natural image to give an optical illusion that the virtual object in the virtual space is present there. As another method, each point of the three-dimensional CG data may be projected onto a point where a straight line connecting each point and the user viewpoint position intersects the transmissive display device 30 in the reference coordinate space. Also, as another processing method for generating the image to be displayed on the transmissive display device 30, four arithmetic operations on specific matrices and numerical values according to empirical rules may be performed on the image and three-dimensional parameters of the image.

The measurement device 20 of the present embodiment includes an image capture unit, which captures an image of the user 2, and a calculation unit, which determines the viewpoint position 2A based on the image-capturing information of the user 2 captured by the image capture unit. The image capture unit is embodied by the sensor 22 installed in the measurement device 20 shown in Fig. 1. The calculation unit is embodied by a processing unit 14 (see Fig. 5) of the image generation device 10 shown in Fig. 1. Alternatively, the calculation unit may be embodied by a processing unit (not shown) within the measurement device 20.

In one example, the sensor 22 (image capture unit) of the present embodiment is a depth sensor that measures, at each pixel, the depth from the sensor 22 to an object (the body of the user 2 in this example). The calculation unit, which is embodied by the processing unit 14 of the image generation device 10, estimates the shape of the human body based on the depth at each pixel measured by the sensor 22, and calculates the viewpoint position 2A based on the position of the head of the body. As such, since the human body shape is estimated from the depth at each pixel and the position of the head in this human body shape is used, the viewpoint position 2A can be identified with high accuracy even if the position and orientation of the body of the user 2 changes in various manners.

Fig. 4 is a conceptual diagram for illustrating calculation of the viewpoint position. The position (Xs, Ys, Zs) and orientation (Pitchs, Yaws, Rolls) of the sensor 22 in the reference coordinate system are set in advance. The coordinates (Xh, Yh, Zh) of the viewpoint position 2A can be calculated from the depth at each pixel acquired by the sensor 22 and the position and orientation of the sensor 22. As shown in Fig. 4, the position (Xm, Ym, Zm), orientation (Pitchm, Yawm, Rollm), and shape (Heightm, Widthm) of the transmissive display device 30 in the reference coordinate system are also set in advance. In this embodiment, as an example, each transmissive display device 30 is rectangular or trapezoidal, and its shape is expressed by a height (Heightm) and a width (Widthm). Furthermore, the transmissive display device 30 may be of any polygonal shape, or may have a curved or spherical surface.

The image captured by the sensor 22 may be a depth image, or may be a depth image and a visible image. For example, the image capture unit may include a sensor that captures a depth image and a camera that captures a visible image, and the calculation unit may calculate the viewpoint position 2A using both the depth image and the visible image. Alternatively, two visible images captured at different positions may be used. In this case, the viewpoint position 2A may be calculated using the parallax between the two visible images. Also, the viewpoint position 2A may be estimated from a single visible image through image processing using AI.

In the examples of Figs. 1 and 4, the measurement device 20 (sensor 22) is installed above or below the transmissive display device 30 in front of the user 2, but there are no limitations to this placement. The measurement device 20 (sensor 22) can also be placed behind the user 2 at a position that does not overlap with the transmissive display device 30. Alternatively, a method is also possible in which the measurement device 20 is installed behind (at the back or rear side of) the transmissive display device 30 and the user's viewpoint position is measured through the display section of the transmissive display device 30. Alternatively, the measurement may be performed using an image captured by any one of those multiple sensors, or the viewpoint position acquired by integrating information from multiple sensors may be used.

As described above, the real space information acquisition device 40 of the present embodiment is a device that acquires environmental information (such as information regarding the position, shape, size, and distance to objects that are present in the real world) of the real space (real world) that the user can see through the transmissive display device 30. In one example, the acquisition device 40 includes a LiDAR sensor and is capable of, regarding an object that is present in the real space around the transmissive display device 30 as viewed by the user, measuring the distance to the object and the shape of the object, for example. This LiDAR (Light Detection and Ranging, or Laser Imaging Detection and Ranging) is a remote sensing technology that mainly uses laser light, and measures scattered light resulting from the application of laser that is emitted in pulses to acquire information about the distance to a distant target, the shape of the target, and the like. The acquisition device 40 uses such a LiDAR sensor to scan the real space around the transmissive display device 30 and acquires information regarding the distance to objects present in that space, their shapes, and the like.

In addition to or instead of the LiDAR sensor described above, the acquisition device 40 may include an imaging camera including an imaging element that generates images (visible images and depth images). By capturing an image of the real space visible through the transmissive display device 30 with the imaging camera and analyzing the captured image using any image processing technology, information regarding the position, size, shape, and the like of objects in the image can be acquired. Examples of objects in an image include construction such as buildings that are present in real space, structures such as bridges, distant mountains, moving vehicles, and living things.

The acquisition device 40 may further include a GPS (Global Positioning System) sensor. The acquisition device 40 that includes a GPS sensor can also acquire position information about the position at which the real space information is acquired by the LiDAR sensor or the imaging camera of the acquisition device 40. This position information may be the information on the position in the world coordinate space of the vehicle or the like on which the system 1 including the acquisition device 40 is mounted, for example.

The acquisition device 40 may also be configured to determine the position and direction of the vehicle using a VPS (Visual Positioning System). In this case, the acquisition device 40 captures an image of the real space outside the vehicle, and the processing unit 14 of the image generation device 10 (see Fig. 5) identifies the position and direction of the vehicle based on the image. To this end, many images whose capturing positions and directions are specified are acquired in advance, and visual features, including the outlines of objects such as buildings that appear in those images, are extracted. The visual features are then stored in a database in the storage unit 12 of the image generation device 10 (see Fig. 5) together with information on position and direction as searchable indexes. Then, when an image captured by the acquisition device 40 is input while the vehicle is traveling, the processing unit 14 of the image generation device 10 extracts visual features from the acquired image and compares the extracted visual features with the visual features stored in the database to identify the position and direction of capture of the image. The identified position and direction of capture of the image are converted into the vehicle's position and direction. Thus, the accurate position and direction of the vehicle can be acquired in real time. In this acquisition process, there may be a time delay in acquiring the data in accordance with the actual movement of the vehicle. To solve this problem, the speed and acceleration vectors are calculated using the current and past positions and orientations of the vehicle, and these are then added to the vehicle information that can be acquired directly from the vehicle without delay (accelerator information, braking information, speed and steering angle information, and the like) to predict the future position and orientation of the vehicle, thereby solving the problem of time delay.

In the above, an example has been given in which visual features are stored as searchable indexes in a database in the storage unit 12 of the image generation device 10 (see Fig. 5) together with position and direction information, but the visual features may also be stored in a database in an external device (not shown). In this case, the image data acquired by the acquisition device 40 is transmitted to the external device from the acquisition device 40. Then, in the external device, visual features are extracted from the image, and the extracted visual features are compared with the visual features stored in the database to identify the position and direction of capture of the image. The information regarding the identified position and direction of the image is transmitted from the external device to the acquisition device 40.

The image generation device 10 according to the present embodiment is now described. Fig. 5 is a block diagram showing the configuration of an image generation device according to this embodiment. As shown in Fig. 5, the image generation device 10 includes a storage unit 12, a processing unit 14, a display output unit 16, and a communication unit 18. In Fig. 5, the image generation device 10 is depicted as a single element, but the image generation device 10 does not necessarily have to be a single physical element, and may be composed of multiple physically separate elements.

The storage unit 12 includes a transitory or non-transitory storage medium such as a ROM (Read Only Memory), RAM (Random Access Memory), HDD (Hard Disk Drive), and SDD (Solid State Drive). The storage unit 12 stores computer programs executed by the processing unit 14 and various data described below. The computer program stored in the non-transitory storage medium of the storage unit 12 includes instructions for performing each process of an image generation method by the processing unit 14, which will be described below with reference to Fig. 6, for example.

The storage unit 12 holds screen layout data, which indicates the position, orientation, and shape of the transmissive display device 30 in a predetermined reference coordinate space, measurement device/acquisition device layout data, which indicates the positions and orientations of the measurement device 20 and the acquisition device 40 in the reference coordinate space, and three-dimensional CG data, which represents virtual objects to be superimposed on the real space viewed through the transmissive display device 30. The reference coordinate space is a space represented by a coordinate system (reference coordinate system) having a predetermined origin O that serves as the basis for calculations in this embodiment, and is a space of an orthogonal coordinate system having three axes, x, y, and z. The reference coordinate space and its origin O may be set in any manner. For example, the reference coordinate space may be fixed relative to the transmissive display device 30, the measurement device 20 and/or the acquisition device 40, the transmissive display device 30, the measurement device 20, and the acquisition device 40, or it may not be fixed to any of them. Also, in the case of a vehicle, the reference coordinate space may be treated as coordinates within the vehicle (local coordinate system) and may be processed separately from the coordinates in the outside world (world coordinate system).

"Three-dimensional CG" is a virtual stereoscopic object in three-dimensional space and differs from two-dimensional images in that it includes depth (stereoscopic) information, and is thus also referred to as 3DCG. One example of three-dimensional CG is a (modeling) virtual stereoscopic object formed by multiple surfaces created with vertices at points located on the three-dimensional coordinates of a virtual space. Each of the surfaces may be given information that reproduces the material and the like, and the object may be expressed by illuminating it with a given light intensity and from a given light source position, for example. The three-dimensional CG data includes information regarding the position in the virtual space of a virtual object displayed in the three-dimensional CG. The storage unit 12 can store three-dimensional CG data on a variety of virtual objects.

The processing unit 14 is composed of, for example, one or more CPUs (Central Processing Units). The processing unit 14 may include one or more GPUs (Graphics Processing Units). The processing unit 14 executes the computer program stored in the storage unit 12 to perform each process of an image generation method, which will be described below with reference to Fig. 6, for example.

The display output unit 16 is an output unit that is connected to the transmissive display device 30 and outputs an image signal for displaying the image generated by the processing unit 14 on the transmissive display device 30. The display output unit 16 includes output terminals such as VGA, DVI, DisplayPort (trademark), HDMI (registered trademark), and USB (trademark) Type-C, and can be connected to the transmissive display device 30 by wire. Alternatively, the display output unit 16 may be configured to be wirelessly connected to the transmissive display device 30 using any wireless communication technology.

The communication unit 18 has a function of transmitting and receiving data between the image generation device 10 and an external device. In particular, in this embodiment, the communication unit 18 may transmit and receive data of an image captured by the sensor 22 of the measurement device 20 and data of information acquired by the acquisition device 40. The communication unit 18 may transmit image data acquired by the acquisition device 40 to an external device, or receive information from the external device regarding the position and direction of capture of the image that are identified in the external device. Furthermore, the communication unit 18 may acquire the necessary part of data of a three-dimensional real space model, which is a model of an object in the real space, via a network. The communication between the external device and the communication unit 18 may be wired communication or wireless communication.

Referring to Fig. 6, for example, an image generation method by the image generation device 10 of the present embodiment is now described as an example. Fig. 6 is an example of a flowchart showing the overall process performed by the image generation device of this embodiment. Each processing in Fig. 6 is executed by the processing unit 14. When the image generated by the image generation device 10 is a moving image consisting of multiple frame images that are successive in time series, calculation may be performed for each frame of the moving image. Also, in the calculation processing at each step of the flowchart, predictive calculation may be performed using past data in a time series to generate an image.

Referring to Fig. 6, the processing unit 14 of the image generation device 10 first acquires information about the real space that the user 2 sees through the transmissive display device 30 (step S101).

The processing unit 14 controls the operation of the acquisition device 40 and causes the acquisition device 40 to acquire information about the real space behind the transmissive display device 30 as viewed from the user 2. As an example of specific processing, the processing unit 14 first acquires GPS position information from the acquisition device 40 to determine the approximate position of the vehicle equipped with the system 1 including the acquisition device 40, and further determines VPS information (more precise position and direction of the vehicle) from the acquisition device 40. The processing unit 14 then acquires data of a three-dimensional real space model that is a three-dimensional model of an object present in the real space. Examples of objects present in the real space include buildings, houses, bridges, railways, roads, and other structures in the real world. Data on a three-dimensional real space model that is a three-dimensional model of such objects includes position information of each object in the real world and information on the shape and size of each object, as information for reproducing the object in a virtual space. Currently, multiple of businesses and organizations offer 3D city model data that is a three-dimensional model of real spaces for a number of cities and natural shapes. Known examples of services that provide 3D city model data include "Project PLATEAU" by the Ministry of Land, Infrastructure, Transport and Tourism and "3D Map Data" by Zenrin Co., Ltd. In the future, it is expected that 3D model data for more cities and natural areas will be offered by various businesses and organizations. In this embodiment, as an example, the "three-dimensional real space model data" can be acquired using a service provided by a business or organization. The communication unit 18 of the image generation device 10 can connect to a service provider server of a business or organization via the Internet or the like, and at least the necessary portion of the three-dimensional real space model data can be downloaded from the server to acquire the three-dimensional real space model data. Alternatively, when three-dimensional real space model data is acquired in advance, the data can be used temporarily or permanently without connecting to the Internet. The acquired three-dimensional real space model data is stored in the storage unit 12.

In addition to or instead of the above process, the processing unit 14 may acquire information about the real space behind the transmissive display device 30 as viewed from the user 2 using a sensor (such as a LiDAR sensor) provided in the acquisition device 40, and acquire information about an object that is present in that real space, such as the distance from the acquisition device 40 to the object, and the size and shape of the object. When there are multiple objects, information regarding the distance, size, shape, and the like of each object is acquired. When the acquisition device 40 includes an imaging camera or a depth sensor, an image of the real space behind the transmissive display device 30 as viewed from the user 2 may be captured by the imaging camera or acquired as a depth image. The processing unit 14 can analyze the acquired real-space image using any known image analysis technology and/or artificial intelligence technology using machine learning to acquire or estimate information regarding the position, shape, and the like of objects in the image (e.g., constructions such as buildings present in the real space, structures such as bridges, traffic lights, and telegraph poles, distant mountains, and the like).

The processing unit 14 then acquires the viewpoint position 2A of the user 2 (step S102). The processing unit 14 calculates the viewpoint position 2A of the user 2 using the measurement device 20 and the method described with reference to Fig. 4, for example.

The processing of step S101 and the processing of step S102 by the processing unit 14 may be performed in a different order, or may be performed in parallel. Also, when the processing of the subsequent steps is to be performed based on data acquired or estimated in the past on a time series, this portion may be skipped since the necessary data has already been acquired without performing both steps.

The processing unit 14 then performs the processing of generating a display image that displays, on the transmissive display device 30, a virtual object to be superimposed on the real space around the transmissive display device 30, which is viewed by the user 2 through the transmissive display device 30 (step S103).

The processing unit 14 continuously identifies the position and direction of the vehicle in the world coordinate system based on the real space environment information from the acquisition device 40, and also continuously identifies the viewpoint position 2A. The processing unit 14 performs the above-mentioned calculation processing on the display image for displaying a virtual object on the screen of the transmissive display device 30 based on the viewpoint position 2A of the user 2 by following the position and direction of the vehicle and the viewpoint position 2A, thereby generating, with strict geometric precision, a display image that appears as if the virtual object coexists in the real world when viewed through the screen of the transmissive display device 30 from the viewpoint position 2A of the user 2. The display image is an image that, when displayed on the transmissive display device 30, appears in the same manner as when the virtual object in the virtual space is viewed through the transmissive display device 30 from the viewpoint position 2A. The display image displayed on the transmissive display device 30 changes following the movement of the vehicle and the viewpoint position 2A, which moves in accordance with the movement of the head of the user 2 inside the vehicle. This allows the user 2 to perceive as if the virtual object is present in the real space. The viewpoint position 2A can be followed by continually generating an image having the rendering contents that represent the visual appearance as viewed from the viewpoint position 2A at that time.

Through the calculation processing of converting such three-dimensional information into two-dimensional information, the display image of the virtual object is projected onto the screen of the transmissive display device 30 with strict geometric precision, taking into account the user's viewpoint position 2A. Thus, a display image is generated that is presented on the transmissive display device 30 as a feasible natural image in which the virtual object viewed from the viewpoint position 2A appears as if it is actually present at that position, even when the user 2 looks at the screen of the transmissive display device 30 from an oblique angle. The processing performed here is not limited to projection transformation. A perspective projection transformation method may be used, or a similar calculation method or four arithmetic operations of specific matrices or values according to empirical rules may also be used.

Additionally, the virtual object may be displayed on the transmissive display device 30 so as to be placed at a position where it appears to overlap partially or completely with a real-space object that is present in the real space around the transmissive display device 30 when viewed from a certain viewpoint position 2A. In this case, processing is performed to cover a part of or the entire virtual object based on three-dimensional real-space model data corresponding to the object in the real space, or three-dimensional data of the object constructed based on the distance to the object and the shape acquired in real time by the real-space information acquisition device 40, and then the virtual object is reflected in the display. This enables the accurate representation of the overlap between them.

The processing of covering a part of or the entire virtual object includes processing of causing the region of the virtual object that is covered by a real-space object to be transparent (or deleted, scraped, or invisible) when a part of or the entire real-space object is present in front of the virtual object as viewed from a certain viewpoint position 2A. More specifically, when the distance from the viewpoint position 2A to a section that forms the virtual object is greater than the distance from the viewpoint position 2A to a section that forms the real-space object, a display image of the virtual object is generated in which the section corresponding to the covered region that is covered by the section forming the real-space object is covered.

The processing unit 14 transmits the signal of the display image thus generated to the transmissive display device 30 via the display output unit 16 of the image generation device 10, causing the transmissive display device 30 to display the display image (step S104).

In this manner, according to the system 1 of this embodiment, the display images of a virtual object displayed in three-dimensional CG and superimposed on the real space viewed through the transmissive display device 30 are continually generated following the changes in the viewpoint position 2A of the user 2, and a moving image of mixed reality is provided to the user 2 via the transmissive display device 30. By displaying the virtual object in three-dimensional CG superimposed on the scenery in real space, the user 2 can be given an optical illusion that the virtual object is present together in the real space of the real world viewed through the transmissive display device 30.

In particular, according to the present embodiment, not only the position information but also information regarding the size, shape, and the like of an object in real space behind the transmissive display device 30 as viewed by the user is acquired, so that it is possible to simulate the front-to-back relationship and relative positional relationship in a state in which the virtual object to be superimposed on an object in real space is virtually placed in the same space. Thus, an image can be generated that reflects and includes the representation created by the covering processing in which the virtual object is partially visible or hidden when the user viewpoint position is used as the starting point. As a result, a virtual object can be superimposed on an object in real space with higher quality, and a more feasible and natural image can be provided to the user 2, giving the user 2 the optical illusion that the virtual object is present in real space.

In the above, as one application example of the system 1 according to this embodiment, a use case has been described in which the transmissive display device 30 is used as a window of a vehicle and a virtual object is superimposed on the outside scenery viewed through the window. However, the application of the system 1 is not limited to this example, and the system 1 can be applied to any other purpose.

Other examples of applications of the system 1 include a use case in which the transmissive display device 30 is used as a window of a building and a virtual object is superimposed on the outside scenery viewed through the window, and a use case in which the transmissive display device 30 is placed on an indoor table, and a virtual object is superimposed on a real space object (such as a shelf inside the room) viewed through the transmissive display device 30. In these use cases, the system 1 including the transmissive display device 30 is fixed and does not move in the world coordinate space. Thus, the local coordinate system of the system 1 is fixed in the world coordinate system. As such, in these use cases, the GPS sensor and the VPS-related functions for identifying the position of the system 1 in the local coordinate system may be omitted from the acquisition device 40 of the present embodiment described above.

Furthermore, in these use cases, since the shapes of real-space objects in the scenery (such as buildings outside a window) or the indoor scenery (such as shelves) viewed through the transmissive display device 30 and their relative positions with respect to the transmissive display device 30 do not change dynamically, the acquisition device 40 may be omitted when environmental information of the real space (real world) is acquired in advance. In this case, a device similar to the acquisition device 40 or a method such as photogrammetry may be used to acquire three-dimensional information of the surrounding real space in advance. Alternatively, a content creator or the like may set the scenery to be viewed through the transmissive display device 30 and the positions and shapes of real-space objects on the image generation device 10 and store them in the storage unit 12 as real-space environmental information. At this time, three-dimensional real space model data such as 3D city model data may be accurately pre-positioned in the virtual space based on its position relative to the position of the transmissive display device 30 that is fixedly positioned on the world coordinate system, and stored in the storage unit 12 as environmental information of the real space. Due to such pre-processing, S101 in the flowchart of Fig. 6 may be omitted in these use cases.

### (Modification)

A modification of the system 1 according to the first embodiment is now described.

In the above-described first embodiment, an example has been described in which the viewpoint position 2A of one user 2 is detected and a display image of a virtual object is generated in accordance with the viewpoint position 2A. In contrast, according to one modification of the present embodiment, a means is provided for displaying a virtual object superimposed on real space for a plurality of users 2.

Fig. 7 is a diagram showing an example of a transmissive display device 30 in a modification of the system according to the first embodiment, and an example of a display image on this transmissive display device 30.

The transmissive display device 30 of this modification is relatively large and has a horizontally elongated shape so that a plurality of users 2 (four users 2 in the illustrated example) lined up side by side can view it simultaneously. Alternatively, a plurality of transmissive displays may be arranged side by side to function substantially equivalently to one relatively large transmissive display 30. The real space behind the transmissive display device 30 of the present modification is visible through the transmissive display device 30. When installed in the section of a window facing a bench in a bus or train, for example, the transmissive display device 30 of this modification is visible simultaneously by a plurality of users 2 seated on the bench.

In this modification, it is assumed that each user 2 views in a predetermined line-of-sight direction (for example, in the direction directly ahead of each user 2) from a predetermined position such as the bench described above. In this modification, the measurement device 20 determines a representative viewpoint position 2B based on a plurality of viewpoint positions 2A identified for the respective users 2. In one example, the representative viewpoint position 2B is the center of gravity of the multiple viewpoint positions 2A. Alternatively, the representative viewpoint position 2B may be preset based on the seat position and shape. Thus, in this modification, it is not necessary to continuously acquire the viewpoint positions after the representative viewpoint position 2B is determined before the users are present in front of the transmissive display device 30 or immediately after the users are present in front of the transmissive display device 30. As such, although other configurations and operations of the system 1 in this modification are similar to those of the system 1 in the first embodiment described above, S102 in the flowchart of Fig. 6 may be skipped depending on the use case.

In the system 1 of this modification, a display image of a virtual object is generated and displayed on the transmissive display device 30 so as to impart an optical illusion that a virtual object coexists with a real-space object in the surroundings viewed through the transmissive display device 30 when the transmissive display device 30 is viewed from the representative viewpoint position 2B.

According to the system 1 of this modification, a display image of a virtual object displayed in three-dimensional CG and superimposed on a real space viewed through the transmissive display device 30 is generated by projection transformation (including perspective projection transformation or a similar calculation method) using the representative viewpoint position 2B and information on arrangement, shape and size of the transmissive display device 30, so that each user 2 is provided, through the transmissive display device 30, with a moving image of mixed reality that appears as if the virtual object displayed in three-dimensional CG is present in the real space of the real world. Each user 2 who views the image displayed on the transmissive display device 30 can experience an optical illusion that the virtual object is present in the real space of the real world viewed through the transmissive display device 30.

However, since the viewpoint position used in this modification is the representative viewpoint position 2B, and the viewpoint position 2A of each user 2 is a fixed position, it is not possible to achieve superimposition representation with strict geometric precision as in the example of the above-mentioned embodiment. Also, when a real-space three-dimensional model is used to perform covering processing for superimposition, misalignment may occur in the outlines of the overlapping sections between a real-space object and a virtual object, so that the accuracy is compromised in terms of the visual appearance presented to the users. The example shown in Fig. 7 shows multiple cheetahs, which are virtual objects and rendered on the transmissive display device 30 as if they are running in the directions indicated by the arrows on the front side of a distant mountain range in the real space extending behind the transmissive display device 30. In such a representation example, the mountains and the cheetahs do not have overlapping sections in the front-to-back relationship with respect to the viewpoint position 2A of each user 2, and they are present independently. This eliminates the need for covering processing on the CG of each cheetah, which is a virtual object, and thus the objective of creating the optical illusion that a virtual object is simultaneously present in the real space of the real world viewed through the transmissive display device 30 is achieved to a certain extent, although the accuracy may be somewhat compromised. In particular, in a use case in which the transmissive display device 30 is used as a window of a vehicle, the effect of giving the user the optical illusion can be enhanced by adding real-world information as described in the above embodiment and devising an appropriate representation. For example, in an example in which a virtual object of a cheetah displayed in three-dimensional CG runs in a virtual space, and the cheetah in the virtual space appears to move slightly backward in parallel as the vehicle proceeds, it is possible to give the user 2 an optical illusion that the cheetah is actually present in the real world by reproducing the relative speed between the vehicle's moving speed and the cheetah's running speed to add a representation that the vehicle overtakes and passes the cheetah, even if the configuration is not capable of strictly accurate superimposition representation.

The present modification, which performs calculation processing to generate a virtual object to be displayed for the representative viewpoint position 2B, is not capable of providing each of the users 2 who have different viewpoint positions 2A with a representation with geometric precision. Nevertheless, compared to simply displaying an image on a transparent display, the modification can provide each user 2 with a display image having a more natural appearance that gives the user 2 an optical illusion that the virtual object is present in the real space, because the virtual object placed in the real space behind the transmissive display device 30 is represented on the transmissive display device 30 based on information such as the representative viewpoint position 2B and the position, size, and orientation of the transmissive display device 30.

### [Second Embodiment]

A second embodiment of the present disclosure is now described.

In the first embodiment described above, an example has been described in which the image generation device 10 prestores in the storage unit 12 three-dimensional CG data for generating a display image representing a virtual object, and generates a display image from the three-dimensional CG data by performing calculation processing that generates a feasible and natural image with geometrical precision that gives the user 2 an optical illusion that the virtual object is actually present there. In addition to the configuration and operation of the system 1 of the first embodiment, the second embodiment provides a means for presenting a display image of a virtual object as a three-dimensional image (stereoscopic image) formed by two images that provide parallax between left and right eyes.

Fig. 8 is a diagram showing a display device and the like in a system according to the second embodiment. The system 1 of this embodiment includes a transmissive display device 30, which displays a display image of a virtual object on a screen, and a three-dimensional glasses device G, which is to be worn by a user 2. Other configurations and operations of the system 1 in this embodiment are similar to those of the system 1 in the first embodiment described above.

The image generation device 10 of this embodiment generates two display images having parallax for left and right eyes as display images of a virtual object in accordance with the viewpoint position 2A of the user 2, and displays them on the screen of the transmissive display device 30. The three-dimensional glasses device G presents two display images separately to the left and right eyes of the user 2. The provision of parallax between left and right eyes for an image corresponding to the viewpoint position 2A of the user 2 results in the user 2 experiencing a three-dimensional effect of the display image of the virtual object and an increased sense of realism and immersion. In other words, in the first embodiment, the objects forming the actual scenery viewed by the user are located at various positions, particularly in the depth direction, and the information received by the left eye differs in a strict sense from the information received by the right eye due to the difference in the positions of the left and right eyes. However, as for virtual objects, even though calculation is performed, the result is ultimately displayed as a unique image on the transmissive display device 30 in front of the user, and the parallax between the left and right eyes is not taken into consideration. As a result, in the first embodiment, a slight sense of incongruity is experienced in the depth direction when the presence of the virtual object is perceived. In contrast, the present embodiment allows the left and right eyes to view through the transmissive display device 30 different images generated with consideration given to parallax, thereby eliminating the sense of incongruity caused by the structural problems that arise in the first embodiment. This achieves superimposition representation with higher quality.

The example shown in Fig. 8 shows a virtual object Vobj, which is the sun and presented three-dimensionally on the transmissive display device 30 in the sky above a distant mountain range in the real space extending behind the transmissive display device 30. The display image showing the virtual object Vobj is displayed on the transmissive display device 30 as two display images having parallax for left and right eyes, and the user 2 wearing the three-dimensional glasses device G can have a visual experience as if the virtual object Vobj, which is the three-dimensional sun, is present in the real space visible through the transmissive display device 30.

As with the first embodiment described above, in the present embodiment, the display images of a virtual object displayed in three-dimensional CG and superimposed on the real space viewed through the transmissive display device 30 are continually generated following the changes in the viewpoint position 2A of the user 2, and a moving image of mixed reality that appears as if the virtual object displayed in three-dimensional CG is present in the real space of the real world is provided to the user 2 via the transmissive display device 30. Thus, for the user 2 who views the image displayed on the transmissive display device 30, the virtual object in three-dimensional CG is superimposed on the scenery in real space and represented with information on the depth provided by the parallax between the left and right eyes. This enhances the optical illusion given to the user 2 that the virtual object is present in the real space of the real world viewed through the transmissive display device 30.

Also, according to the present embodiment, not only the position information but also information regarding the size, shape, and the like of an object in real space around the transmissive display device 30 as viewed by the user is acquired, so that it is possible to simulate the front-to-back relationship and relative positional relationship in a state in which the virtual object to be superimposed on an object in real space is virtually placed in the same space. Thus, an image can be generated that reflects and includes the representation created by the covering processing in which the virtual object is partially visible or hidden when the user viewpoint position is used as the starting point. As a result, a virtual object can be superimposed on an object in real space with higher quality, and a more feasible and natural image can be provided to the user 2, giving the user 2 the optical illusion that the virtual object is present in real space.

In particular, according to the present embodiment, the display images that display the virtual object Vobj as if it is in the real space of the real world are continually generated following the changes in the viewpoint position 2A of the user 2 and displayed on the transmissive display device 30 as two display images having parallax for left and right eyes. Thus, the user 2 wearing the three-dimensional glasses device G can have a visual experience as if the virtual object Vobj is present in the real space visible through the transmissive display device 30 without experiencing a sense of incongruity including the depth direction.

There are no particular limitations on the method for the transmissive display device 30 and the three-dimensional glasses G according to this embodiment. For example, it may be an anaglyph method, a polarizing method, or a liquid crystal shutter method. When a liquid crystal shutter method is adopted as the three-dimensional image method, a synchronization signal is transmitted to the three-dimensional glasses G to alternately open and close the left and right liquid crystal shutters of the three-dimensional glasses G in synchronization with the timing at which the left and right display images are alternately switched and displayed on the transmissive display device 30. In this case, the system 1 further includes a synchronization signal transmission device 50 that transmits such a synchronization signal, and the processing unit 14 of the image generation device 10 drives and controls the synchronization signal transmission device 50, for example. The synchronization signal transmission device 50 transmits a synchronization signal, which may be infrared light for example, to the three-dimensional glasses G. Additionally, three-dimensional glasses are generally smaller and lighter than head-mounted displays. Thus, unlike head-mounted displays, they do not cause a sense of uneasiness or discomfort. Furthermore, unlike current goggle-type MR devices such as Hololens, they do not limit the viewing angle at which images can be viewed to a narrow range.

### (Modification)

A modification of the system 1 according to the second embodiment is now described.

In the second embodiment described above, an example has been described in which the viewpoint position 2A of one user 2 is detected, and a display image formed by two display images having parallax for left and right eyes of a virtual object is generated in accordance with the viewpoint position 2A and displayed on the transmissive display device 30, and a three-dimensional virtual object superimposed on the real space visible through the transmissive display device 30 is presented to the user 2 wearing a three-dimensional glasses device G. In contrast, according to one modification of this embodiment, a means is provided for presenting a three-dimensional virtual object superimposed on real space to a plurality of users 2 wearing three-dimensional glasses devices G.

Fig. 9 is a diagram showing an example of a transmissive display device 30 in a modification of the system according to the second embodiment, and an example of a display image on this transmissive display device 30.

The transmissive display device 30 of this modification is relatively large and has a horizontally elongated shape so that a plurality of users 2 (four users 2 in the illustrated example) lined up side by side can view it simultaneously. The transmissive display device 30 of this modification is also a transmissive display, and the real space behind the transmissive display device 30 is visible through the transmissive display device 30. When installed in the section of a window facing a bench in a bus or train, for example, the transmissive display device 30 of this modification is visible simultaneously by a plurality of user 2 seated together on the bench.

In this modification, the measurement device 20 detects the viewpoint position 2A of each user 2, and projection transformation, perspective projection transformation, or similar calculation processing is performed on the display image of the virtual object Vobj in accordance with the viewpoint position 2A of each user 2. In one example, the present modification adopts a liquid crystal shutter method as the three-dimensional image method, and further includes a synchronization signal transmission device 50, which transmits a synchronization signal to alternately open and close the left and right liquid crystal shutters of the three-dimensional glasses G in synchronization with the timing at which the left and right display images are alternately switched and displayed on the transmissive display device 30. The processing unit 14 of the image generation device 10 drives and controls the synchronization signal transmission device 50. The synchronization signal transmission device 50 transmits a synchronization signal, which may be infrared light for example, to the three-dimensional glasses G.

Other configurations and operations of the system 1 in this modification are similar to those of the system 1 in the second embodiment described above.

In the system 1 of this modification, a display image of a virtual object Vobj is generated and displayed on the transmissive display device 30 such that the virtual object Vobj is three-dimensionally superimposed on the real space in the surroundings viewed through the transmissive display device 30 when the transmissive display device 30 is viewed from the viewpoint position 2A of each user 2. The example shown in Fig. 9 shows a virtual object Vobj, which is the sun and presented three-dimensionally on the transmissive display device 30 in the sky above a distant mountain range in the real space extending behind the transmissive display device 30.

Also, the processing unit 14 needs to perform display control of the display image of the virtual object Vobj for each of multiple users 2 such that left and right display images having appropriate parallax for the user 2 are displayed on the transmissive display device 30 when the users 2 view the virtual object Vobj from their respective viewpoint positions. In one example, this modification uses a transmissive display device 30 with a relatively high screen display rate (e.g., 240 Hz), and the processing unit 14 controls the display images for four users to be switched in sequence using a time-division method such that the left and right display images (two images) for each user 2 are each displayed at a display rate of 30Hz. The display rate of 30 Hz is approximately the same as the display rate of terrestrial digital television, and each user 2 can view the virtual object Vobj displayed at the display rate of 30 Hz without experiencing a sense of incongruity. On the other hand, since a higher display rate can make flicker caused by the operation of the liquid crystal shutter less noticeable, a 480 Hz display device may be used to display at a display rate of 60 Hz for each eye of each user 2, or other frequency may be used.

As with the present embodiment described above, in the present modification, the display images of a virtual object displayed in three-dimensional CG and superimposed on the real space viewed through the transmissive display device 30 are continually generated following the changes in the viewpoint position 2A of each user 2, and a moving image of mixed reality that appears as if the virtual object displayed in three-dimensional CG in the real space of the real world is provided to each user 2 via the transmissive display device 30. Thus, for each user 2 who views the image displayed on the transmissive display device 30, the virtual object in three-dimensional CG is superimposed on the scenery in real space and represented with information on the depth provided by the parallax between the left and right eyes. This enhances the optical illusion given to each user 2 that the virtual object is present in the real space of the real world viewed through the transmissive display device 30.

Also, according to the present modification, not only the position information but also information regarding the size, shape, and the like of an object in real space around the transmissive display device 30 as viewed by each user is acquired, so that it is possible to simulate the front-to-back relationship and relative positional relationship in a state in which the virtual object to be superimposed on an object in real space is virtually placed in the same space. Thus, an image can be generated that reflects and includes the representation created by the covering processing in which the virtual object is partially visible or hidden when each user viewpoint position is used as the starting point. As a result, a virtual object can be superimposed on an object in real space with higher quality, and a more feasible and natural image can be provided to each user 2, giving the user 2 the optical illusion that the virtual object is present in real space.

In particular, according to the present embodiment, the display images that display the virtual object Vobj as if it is in the real space of the real world are continually generated following the changes in the viewpoint position 2A of each user 2 and displayed on the transmissive display device 30 as two display images having parallax for left and right eyes. Thus, each user 2 wearing the three-dimensional glasses device G can have a visual experience as if the three-dimensional virtual object Vobj is present in the real space visible through the transmissive display device 30 without experiencing a sense of incongruity including the depth direction.

Additionally, three-dimensional glasses are generally smaller and lighter than head-mounted displays. Thus, unlike head-mounted displays, they do not cause a sense of uneasiness or discomfort. Furthermore, unlike current goggle-type MR devices such as Hololens, they do not limit the viewing angle of the image to a narrow range.

### [Third Embodiment]

A third embodiment of the present disclosure is now described.

In the second embodiment described above, an example has been described in which a means is provided for presenting a user who is wearing a three-dimensional glasses device with a display image of a virtual object as a three-dimensional image (stereoscopic image) formed by two images that provide parallax between the left and right eyes. In this embodiment, a means is provided for presenting a naked-eye user who is not wearing a three-dimensional glasses device with a display image of a virtual object as a three-dimensional image (stereoscopic image) formed by two images that provide parallax between the left and right eyes.

Fig. 10 is a schematic diagram for illustrating a configuration of a display device in the system of the third embodiment.

As shown in Fig. 10, in one example, the transmissive display device 30 of this embodiment is a display capable of simultaneously displaying different images in multiple display directions, realizing naked-eye stereoscopic vision of a type involving a lenticular lens attached to the surface of a transmissive organic EL display (OLED). The transmissive display device 30 of this embodiment includes a transparent substrate 301 having a plurality of pixel units 302 arranged in an array shape, and a plurality of lens elements 303 provided on the respective pixel units 302 on the transparent substrate 301. In this embodiment, each of the lens elements 303 may be a semicircular cylindrical lens called a lenticular lens, for example. As the lens element 303, other than the lenticular lens, a lens having any three-dimensional shape that controls the direction of light, such as a hemispherical or semi-ellipsoidal shape, may be used. Also, instead of using a lens, a film or plate that creates a parallax barrier may be used.

In one example, the lens elements 303 can be provided on the respective pixel units 302 by individually manufacturing the lens elements 303 and individually attaching with clear adhesive them at the positions on the transparent substrate 301 where the pixel units 302 are provided. Alternatively, 3D printing technology may be used to eject a transparent material onto the positions of the transparent substrate 301 where the pixel units 302 are provided so as to form lens elements 302, thereby providing the lens elements 302 on the respective pixel unit 302. Furthermore, the lens elements 303 can be provided on the respective pixel units 302 by forming in advance a transparent film member on which a plurality of lens elements 303 are formed and positioned relative to the pixel units 302 on the transparent substrate 301 and by attaching this transparent film member to the transparent substrate 301 while performing predetermined positioning. Alternatively, the transparent substrate 301 may be formed by a method in which an array of pixel units and electrode wires for supplying power and signals to the pixel units are inserted into an intermediate film portion of a plate having a structure in which multiple transparent substrates are bonded together, and a film or plate including lens elements or a film or plate that creates a parallax barrier are simultaneously inserted. Also, a method may be used in which, after forming a transparent substrate 301 by inserting only an array of pixel units into an intermediate film, a film or plate including lens elements or a film or plate that creates a parallax barrier is attached to the outside. The transparent substrate may be a transparent resin plate including an acrylic plate, or may be glass. Any material may be used as long as it has a certain degree of transparency.

The pixel units 302 and the lens elements 303 are arranged at predetermined intervals from one another. In the region where neither a pixel unit 302 nor a lens element 303 is arranged, the real space behind the transmissive display device 30 can be viewed through the transparent substrate 301. In the transmissive display device 30 of this embodiment, the pixel units 302 and the lens elements 302 are arranged relatively "sparsely". In one example, the proportion of the area occupied by the pixel units 302 and the lens elements 303 in the entire screen of the transmissive display device 30 is several tens of percent to several percent, and it can be several percent or less if future technological developments allow for a smaller pixel unit size. Reducing the size of each pixel unit or increasing the light intensity of each pixel unit, where possible, allows the image to be visible to the user despite the surrounding light while maintaining transparency. In an application in which a virtual object is superimposed on the real space viewed through the transmissive display device 30 as in this example, sufficient resolution and clarity of the image can be provided to the user viewing the virtual object.

In one example, electrode wires made of a highly transparent conductive material and very fine metal electrode wires (not shown) that are electrically connected to the pixel units 302 are provided on the transparent substrate 301, and the pixel units 302 are individually driven to emit light or controlled to transmit light by the power and drive signals supplied via these electrodes. Here, each pixel unit may be a self-luminous element such as an organic EL or micro LED, or may be an element that controls light transmission using a liquid crystal mechanism. Alternatively, the pixel unit may be an element or a light-emitting material that reflects external projection light to allow the user to recognize a difference in color.

Other than that, the configuration and operation of each part of the system 1 according to this embodiment are generally similar to that of the system 1 described in the first embodiment, and the configurations and operations that differ from those of the system 1 will be described below.

Referring to Figs. 11 and 12, a more detailed configuration of the transmissive display device 30 of this embodiment and display operation control by the transmissive display device 30 are now described.

In one example, in the transmissive display device 30 of this embodiment, each pixel unit 302 is configured as an aggregated group of 45 pixels. That is, one pixel unit 302 consists of 45 pixels, and an RGB display element 302' is placed in each pixel. The RGB display elements 302' are formed by three subpixel display elements that display three colors, R (red), G (green), and B (blue). Alternatively, the RGB display element 302' may be a four-color display element. A pixel unit 302 including 45 pixels corresponds to one pixel of a general display.

Additionally, in one example, each pixel unit 302 includes a lens element 303, which is a semicircular cylindrical lens called a lenticular lens for refracting the directions of the optical paths of the 45 RGB light beams displayed by the RGB display elements 302' of the 45 pixels in that pixel unit 302 in 45 display directions (hereinafter, these directions are referred to as "display directions 501"), namely 0th to 44th display directions shown in Fig. 12.

Then, the image generation device 10 inputs, for each of the different viewpoint positions 2A of the users 2₁ to 2₄, data of display images generated by the image generation device 10 corresponding to those viewpoint positions 2A₁ to 2A₄ to the RGB display elements 500 of the pixel numbers corresponding to the directions 502A, 502B, 502C, and 502D from a predetermined origin O (e.g., the center position of the transmissive display device 30) in the reference coordinate space (Fig. 4) to the viewpoint positions 2A₁ to 2A₄ of the user 2₁ to 2₄. Hereinafter, these directions will be referred to as user viewpoint position directions 502A, 502B, 502C, and 502D. Alternatively, these directions are collectively referred to as user viewpoint position directions 502.

Here, the processing unit 14 of the image generation device 10 may generate, for each of the viewpoint positions 2A₁ to 2A₄ of the users 2₁ to 2₄ detected by the measurement device 20, a right-eye display image and a left-eye display image such that, when a three-dimensional virtual object in a virtual space is viewed through the transmissive display device 30 by the right eye and the left eye of the user, which are at a certain lateral distance from the viewpoint position in the right-left direction, the image appears feasible and natural with geometrical precision to give each user 2 the optical illusion that the virtual object is present in real space. When generating a right-eye display image and a left-eye display image to be displayed on the screen of the transmissive display device 30, the image generation device 10 may perform projection transformation, perspective projection transformation, or similar calculation processing to project a virtual object represented by three-dimensional CG data onto the screen of the transmissive display device 30, that is, a two-dimensional surface, based on the viewpoint positions 2A₁ to 2A₄ of the users 2₁ to 2₄.

In this case, the processing unit 14 causes the RGB display elements 302' of the pixel numbers corresponding to the right-eye display direction and the RGB display elements 302' of the pixel numbers corresponding to the left-eye display direction, which are located on both sides of each of the user viewpoint directions 502A, 502B, 502C, and 502D corresponding to the viewpoint positions, to display, for each of the viewpoint positions 2A₁ to 2A₄ of the users 2₁ to 2₄, the above-mentioned right-eye display image and left-eye display image generated corresponding to the viewpoint position.

As a result of the above-described control operation, for each of the users 2₁ to 2₄ in Fig. 11, it is possible to simultaneously display, on the transmissive display device 30, images whose display states in the virtual space are controlled for each user 2, to the plurality of users 2₁ to 2₄ located at various positions, as indicated by line-of-sight directions 500 connecting the left eyes and right eyes and the lens elements 303, and as described using the displays D1, D2, D3 and the like of Fig. 3. In this case, each of 2₁ to 2₄ receives images with binocular parallax in the right and left eyes, and it is therefore possible to experience stereoscopic vision with the naked eye with a sense of realism.

In this embodiment, the measurement device 20 detects the viewpoint position 2A of each user 2, and projection transformation, perspective projection transformation, or similar calculation processing is performed on the display image of the virtual object Vobj according to the viewpoint position 2A of each user 2.

Fig. 13 is a flowchart showing a detailed example of the display processing of step S104 of Fig. 6 described in the first embodiment. Hereinafter, this processing will be described with reference to the above-described illustrative diagram of Fig. 12. The processing unit 14 first sets left-eye display image data generated corresponding to the left-eye display direction of the first viewpoint position 2A (e.g., 2A₁ in Fig. 12) to the RGB display elements 302' of the pixel numbers corresponding to, among the 45 display directions 501 from 0th to 44th illustrated in Fig. 12, the 0th to 3rd display directions 501 in Fig. 12, for example, between the 0th display direction 501 and the user viewpoint position direction 502 (e.g., 502A in Fig. 12) passing through the first viewpoint position 2A (e.g., 2A₁ in Fig. 12) among the one or more viewpoint positions 2A calculated in step S102 of Fig. 6 (step S901). The processing of this setting is executed on the RGB display elements 302' of the above-described pixel numbers in the pixel units 302 (see Fig. 11) forming the transmissive display device 30.

Next, the processing unit 14 increments by 1 the variable value indicating the viewpoint position 2A stored in, for example, a RAM or register (not shown) in the storage unit 12 of the image generation device 10 (step S905).

Next, the processing unit 14 determines whether the variable value indicating the viewpoint position 2A has exceeded a predefined final user viewpoint position (step S906). The value indicating the final viewpoint position 2A can be predefined in accordance with the number of users 2 using the system 1 and stored in the above-mentioned RAM or register. Step S906 determines whether the variable value indicating the viewpoint position 2A has exceeded the above-mentioned predefined and stored value to determine whether the variable value indicating the viewpoint position 2A has exceeded the final user viewpoint position.

If processing has not been executed up to the final user viewpoint position and the result of the determination in step S906 is NO, the processing unit 14 moves control to the processing of step S902 and executes the processing from step S902 to step S904.

First, the processing unit 14 calculates a midpoint direction 503 (e.g., 503AB of Fig. 12) that passes through a midpoint between the previous viewpoint position 2A (e.g., 2A₁ of Fig. 12) and the current viewpoint position 2A (e.g., 2A₂ of Fig. 12) (step S902).

Next, the processing unit 14 sets right-eye display image data generated corresponding to the right-eye display direction of the previous user viewpoint position 2A (e.g., 2A₁ in Fig. 12) to the RGB display elements 302' of the pixel numbers corresponding to the 4th to 10th display directions 501 in Fig. 12, for example, between the user viewpoint position direction 502 (e.g., 502A in Fig. 12) passing through the previous user viewpoint position 2A (e.g., 2A₁ in Fig. 12) and the midpoint direction 503 (e.g., 503AB in Fig. 12) calculated this time (step S903). The processing of this setting is executed on the RGB display elements 302' of the above-described pixel numbers in the pixel units 302 (see Fig. 11) forming the transmissive display device 30.

Next, the processing unit 14 sets left-eye display image data generated corresponding to the left-eye display direction of the current user viewpoint position 2A (e.g., 2A₂ in Fig. 12) to the RGB display elements 302' of the pixel numbers corresponding to the 11th to 16th display directions 501 in Fig. 12, for example, between the midpoint direction 503 (e.g., 503AB in Fig. 12) calculated this time in step S902, and the user viewpoint position direction 502 (e.g., 502B in Fig. 12) passing through the current user viewpoint position 2A (e.g., 2A₂ in Fig. 12) (step S904). The processing of this setting is executed on the RGB display elements 302' of the above-described pixel numbers in the pixel units 302 (see Fig. 11) forming the transmissive display device 30.

As described above, the processing unit 14 then increments the variable value indicating the viewpoint position 2A by 1 (step S905), and determines whether the resulting variable value has exceeded the predefined final user viewpoint position 2A (step S906).

If processing has not yet been executed up to the final viewpoint position 2A and the result of the determination of step S906 is NO, the processing unit 14 once again executes the above-described processing of steps S902 to S904.

In step S902, which is similar to that described above, a midpoint direction 503BC passing through the midpoint between the previous viewpoint position 2A₂ and the current user viewpoint position 2A₃ in Fig. 12, for example, is calculated.

Next, in step S903, which is similar to that described above, right-eye display image data generated corresponding to the right-eye display direction of the previous viewpoint position 2A₂ is set to the RGB display elements 302' of the pixel numbers corresponding to the 17th to 21st display directions 501 in Fig. 12, for example, between the user viewpoint position direction 502B passing through the previous viewpoint position 2A₂ and the midpoint direction 503BC calculated this time in Fig. 12, for example. The processing of this setting is executed on the RGB display elements 302' of the above-described pixel numbers in the pixel units 302 (see Fig. 11) forming the transmissive display device 30.

Next, in step S904, which is similar to that described above, left-eye display image data generated corresponding to the left-eye display direction of the current viewpoint position 2A₃ is set to the RGB display elements 302' of the pixel numbers corresponding to the 22nd to 26th display directions 501 in Fig. 12, for example, between the midpoint direction 503BC calculated this time in step S902 and the user viewpoint position direction 502C passing through the current viewpoint position 2A₃ in Fig. 12, for example. The processing of this setting is executed on the RGB display elements 302' of the above-described pixel numbers in the pixel units 302 (see Fig. 11) forming the transmissive display device 30.

As described above, the processing unit 14 then increments the variable value indicating the viewpoint position 2A by 1 (step S905), and determines whether the resulting variable value has exceeded the predefined final user viewpoint position 2A (step S906).

If processing has not yet been executed up to the final viewpoint position 2A and the result of the determination of step S906 is NO, the processing unit 14 once again executes the above-described processing of steps S902 to S904.

In step S902, which is similar to that described above, a midpoint direction 503CD passing through the midpoint between the previous viewpoint position 2A₃ and the current viewpoint position 2A₄ in Fig. 12, for example, is calculated.

Next, in step S903, which is similar to that described above, right-eye display image data generated corresponding to the right-eye display direction of the previous viewpoint position 2A₃ is set to the RGB display elements 302' of the pixel numbers corresponding to the 27th to 30th display directions 501 in Fig. 12, for example, between the user viewpoint position direction 502C passing through the previous viewpoint position 2A₃ and the midpoint direction 503CD calculated this time in Fig. 12, for example. The processing of this setting is executed on the RGB display elements 302' of the above-described pixel numbers in the pixel units 302 (see Fig. 11) forming the transmissive display device 30.

Next, in step S904, which is similar to that described above, left-eye display image data generated corresponding to the left-eye display direction of the current user viewpoint position 2A₄ is set to the RGB display elements 302' of the pixel numbers corresponding to the 31st to 34th display directions 501 in Fig. 12, for example, between the midpoint direction 503CD calculated this time in step S902 and the user viewpoint position direction 502D passing through the current viewpoint position 2A₄ in Fig. 12, for example. The processing of this setting is executed on the RGB display elements 302' of the above-described pixel numbers in the pixel units 302 (see Fig. 11) forming the transmissive display device 30.

As described above, the processing unit 14 then increments the variable value indicating the viewpoint position 2A by 1 (step S905), and determines whether the resulting variable value has exceeded the predefined final viewpoint position 2A (step S906).

If the result of the determination in step S906 becomes YES after processing is executed up to the final user viewpoint position 2A, the processing unit 14 executes the processing of the final step S907. In step S907, the processing unit 14 sets right-eye display image data generated corresponding to the right-eye display direction of the final user viewpoint position 2A (e.g., 2A₄ in Fig. 12) to the RGB display elements of the pixel numbers corresponding to the 35th to 44th display directions 501 in Fig. 12, for example, between the user viewpoint position direction 502 (e.g., 502D in Fig. 12) passing through the current viewpoint position 204 (e.g., 2A₄ in Fig. 12) and the 44th display direction 501.

The processing unit 14 then ends the image display processing in step S104 of Fig. 6, which is illustrated in the flowchart of Fig. 13.

In the image display processing illustrated in the above-described flowchart of Fig. 13, the right-eye or left-eye display image data generated corresponding to the right-eye or left-eye display direction of the adjacent viewpoint position 2A is copied and set to the display directions 501 in the section defined by the user viewpoint position directions 502 of two viewpoint positions 2A and the midpoint direction 503 passing through the midpoint between these viewpoint positions 2A in Fig. 12. In contrast, using different algorithms for mapping display pixels to the display directions 501 for the viewpoint position 2A of the user 2 near the transmissive display device 30 and the viewpoint position 2A of the user 2 far from the transmissive display device 30, it is also possible to make the display pixel change sensitivity uniform according to the viewpoint position A of the user 2. Alternatively, instead of simply copying, display pixels calculated by performing interpolation processing according to each display direction 501 between two adjacent display images may be set.

In this manner, according to the present embodiment, for multiple naked-eye users 2 who are not wearing a three-dimensional glasses device, and for each of the viewpoint positions 2A₁ to 2A₄ of the users 2₁ to 2₄, it is possible to present and superimpose, on the real space viewed through the transmissive display device 30, a display image of a virtual object as a three-dimensional image (stereoscopic image) formed by two images that provide parallax between the left and right eyes such that, when the three-dimensional virtual object in a virtual space is viewed through the transmissive display device 30 by the right eye and the left eye of the user, which are at a certain lateral distance from the viewpoint position in the right-left direction, for example, the image appears feasible and natural with geometrical precision to give each user 2 the optical illusion that the virtual object is present in the real space. Additionally, according to this embodiment, different display images of a virtual object corresponding to the viewpoint positions 2A of the users 2 can be simultaneously presented to the users 2.

As an example of an application of the transmissive display device 30 in this embodiment, an application may be contemplated in which the transmissive display device 30 of the present embodiment is attached to a glass section of an automobile or the like, and a three-dimensional display image of a virtual object is presented to each of multiple users 2 seated in the front and rear seats of the automobile. According to the transmissive display device 30 of this embodiment, a display image of a virtual object can be displayed separately to multiple users 2 who are located at different distances and line-of-sight directions relative to the transmissive display device 30, so that a virtual object corresponding to the scenery viewed from the viewpoint position of each user 2 can be superimposed and presented on the real space visible around the transmissive display device 30 serving as the glass of the moving automobile.

### (Modification)

Fig. 14 is a diagram showing a modification of the display device in the system of the third embodiment.

In the display device 30 according to the third embodiment shown in Fig. 10, for example, a lens element 303 is separately provided for each pixel unit 302. However, as shown in this modification, the lens element 303 may have a vertically elongated shape that is arranged across multiple pixel units 302 in each column among the multiple pixel units 302 arranged in a matrix shape. This allows the number of manufacturing steps for the lens elements 303 to be reduced as compared to a configuration in which a lens element 303 is provided separately for each pixel unit 302.

The above-described embodiments and modifications of the present invention are merely examples for explaining the present invention, and are not intended to limit the scope of the present invention to these embodiments. Those skilled in the art can implement the present invention in various other aspects without departing from the essentials of the present invention.

### [Reference Signs List]

- 1: Image display system
- 2: User
- 2A: Viewpoint position
- 10: Image generation device
- 20: Measurement device
- 30: Display device
- 40: Real space environment information acquisition device
- 50: Synchronization signal transmission device

## Claims

1. An image display system comprising:
a transmissive display device configured to be capable of displaying an image;
a storage unit configured to store, for each of the display device, an object in real space that is present around the display device, and an arbitrary virtual object, position information and three-dimensional shape information in a virtual space constructed on a predetermined reference coordinate system that is set by superimposition thereof on a coordinate system in real space; and
a processing unit configured to generate an image and display the image on the display device by performing, in order for a virtual object to be accurately superimposed on a real space that is viewed through the display device when the display device is viewed by a user from a given viewpoint position such that the virtual object appears in a same manner as when the virtual space is viewed from the viewpoint position, projection transformation or perspective projection transformation based on the viewpoint position, position information and a three-dimensional shape of the display device, and three-dimensional image data representing the virtual object.

2. The image display system according to claim 1, further comprising:
a real space information acquisition device configured to acquire information about a real space that is viewed through the display device from a viewpoint position of the user, wherein
the storage unit is configured to store information acquired by the real space information acquisition device, and
the processing unit is configured to generate the image using information acquired by the real space information acquisition device.

3. The image display system according to claim 1, wherein the viewpoint position is a predefined position.

4. The image display system according to claim 1, wherein
the image display system further comprises a measurement device configured to measure the viewpoint position of the user, and
the viewpoint position is set based on a position measured by the measurement device.

5. The image display system according to claim 1, wherein
the image display system further comprises a three-dimensional glasses device to be worn by the user,
the processing unit is configured to generate two display images having parallax for left and right eyes in accordance with the viewpoint position, and display the two display images on the display device, and
the three-dimensional glasses device is configured to display the two display images respectively to left and right eyes of the user.

6. The image display system according to claim 5, wherein
the image display system includes a plurality of the three-dimensional glasses devices to be individually worn by a plurality of the users,
the processing unit is configured to generate, in accordance with the viewpoint position of each of the users, the two display images having parallax for left and right eyes for each of the viewpoint positions, and display, on the display device, the two display images assigned to each of the viewpoint positions by using a time-division method, and
each of the three-dimensional glasses devices is configured to display the two display images assigned to the corresponding viewpoint position respectively to the left and right eyes of the user.

7. The image display system according to claim 1, wherein
the image display system further comprises a measurement device configured to measure the viewpoint position of each of the one or more users and the viewpoint position is a position measured by the measurement device,
the display device is configured to be capable of simultaneously displaying different images in a plurality of display directions, and
the processing unit is further configured to, for each of the viewpoint positions of the one or more users measured by the measurement device, generate the image that is generated by performing, in order for a virtual object to be accurately superimposed on a real space that is viewed through the display device when the display device is viewed from the viewpoint position such that the virtual object appears in a same manner as when the virtual space is viewed from the viewpoint position, projection transformation, perspective projection transformation, or calculation processing similar thereto based on each of the viewpoint positions, position information and a three-dimensional shape of the display device, and three-dimensional image data representing the virtual object, in accordance with the viewpoint position, and display the image in a user viewpoint position direction toward the viewpoint position from the display device.

8. The image display system according to claim 7, wherein
the processing unit is further configured to
generate, for each of the viewpoint positions, a right-eye display image and a left-eye display image by performing, in order for a virtual object to be accurately superimposed on a real space that is viewed through the display device from each of right and left eyes of the user at the viewpoint position such that the virtual object appears in a same manner as when the virtual space is viewed from a position of each of the right and left eyes at the viewpoint position, projection transformation or perspective projection transformation based on positions of the right and left eyes at the viewpoint position, position information and a three-dimensional shape of the display device, and three-dimensional image data representing the virtual object, and
cause the right-eye display image to be displayed by the display device in the user viewpoint position direction on a side corresponding to the right eye of the user with the viewpoint position serving as a boundary, and cause the left-eye display image to be displayed by the display device in the user viewpoint position direction on a side corresponding to the left eye of the user with the user viewpoint position serving as a boundary.

9. A transmissive display device comprising: a substrate that includes a plurality of pixel units configured to form a display image and that has light permeability; and lens elements provided on the pixel units, wherein
the plurality of pixel units are arranged spaced apart from one another on the substrate and each of the pixel units includes a plurality of display elements, and
each of the lens elements is configured to refract directions of optical paths of light beams emitted from the respective display elements of the corresponding pixel units into separate directions.

10. The display device according to claim 9, wherein the lens element is provided for each of the pixel units.

11. The display device according to claim 9, wherein
the plurality of pixel units are arranged in a matrix shape, and
each of the lens elements is configured to be arranged across a plurality of pixel units in a row among the pixel units arranged in the matrix shape.
